# EUROPÄISCHE PATENTSCHRIFT

(11) **EP 1 124 669 B1**
(45) Veröffentlichungstag und Bekanntmachung des Hinweises auf die Patenterteilung: **08.05.2002**
(21) Anmeldenummer: 99960820.1
(22) Anmeldetag: 27.10.1999
(51) Int. Cl.: B26B 27/00

(54) **WERKZEUG ZUM HERAUSSCHNEIDEN VON KRAFTFAHRZEUG-WINDSCHUTZSCHEIBEN**
TOOL FOR CUTTING OUT MOTOR VEHICLE WINDSCREENS
OUTIL POUR DECOUPER DES PARE-BRISE DE VEHICULES AUTOMOBILES

(30) Priorität: 28.10.1998 DE 29819258 U
(43) Veröffentlichungstag der Anmeldung: 22.08.2001
(73) Patentinhaber: Gmeilbauer, Engelbert, D-82229 Seefeld (DE)
(72) Erfinder: Gmeilbauer, Engelbert, D-82229 Seefeld (DE)
(74) Vertreter: Petra, Elke, Dipl.-Ing.
(86) Internationale Anmeldenummer: DE9903421
(87) Internationale Veröffentlichungsnummer: WO0024536

(56) Entgegenhaltungen:
- DE-A- 19 623 635
- US-A- 5 622 093

## Beschreibung

Die Erfindung bezieht sich auf ein Werkzeug zum Herausschneiden von Kfz-Windschutzscheiben, gemäß Oberbegriff des Anspruchs 1.

Bisher wurden Kfz-Windschutzscheiben, insbesondere Frontscheiben meist entweder mit einem oszillierenden Messer oder mit einem dünnen Stahldraht, der an jedem Ende je einen Haltegriff aufweist, entfernt.

Das oszillierende Messer hat den Nachteil, daß es nicht überall einsetzbar ist, da die zu durchtrennenden Gummidichtungen bzw. Kleberaupen zum Teil sehr dick sind und sich das Messer insbesondere an den Rundungen verkanten und leicht abbrechen kann. Dies führt in der Praxis dazu, daß Messer öfter nachgekauft werden müssen, was finanziell erheblich zu Buche schlägt. Außerdem sind eine teure Oszillationsmaschine und ein Stromanschluß erforderlich. Die Verletzungsgefahr bei unsachgemäßem Gebrauch ist nicht zu unterschätzen.

Bei der Drahtkonstruktion ist nachteilig, daß zwei Personen zur Durchführung der Arbeiten benötigt werden: eine, die den Draht im Auto gegenhält und eine zweite, die den Draht nach dem Durchstechen durch die Kleberaupe außen mit ständigen Zug- und Entlastungsbewegungen, ähnlich wie beim Sägen, rund um die Scheibe führt.

Zudem ist aus der US-PS 5,622,093 bzw. dem Prospekt Equalizer, Seite 18 bzw. 27 unter der Bezeichnung "Side Winder" ein Gerät zum Entfernen von Kfz-Windschutzscheiben bekannt, das einen an der Windschutzscheibe innen befestigbaren Saugheber aufweist, der über eine Vakuumpumpe aktivierbar ist. An der Oberseite des topfförmigen Gehäuses des Saughebers ist ein Drehkopf rotierbar befestigt, an diesem ist wiederum eine relativ lange Zugfeder angebracht, die mit dem inneren Ende eines Schneiddrahtes verbunden ist. Beim Schneiden wird an dem durch die Kleberaupe bzw. Dichtung hindurch gesteckten Draht über einen Handgriff außen radial wiederholt gezogen und freigegeben, wodurch die Zugfeder entsprechend gedehnt und entlastet wird. Dadurch führt der Schneiddraht eine zum Saughebel radiale Verschiebebewegung durch, die zusammen mit einem tangentialen Vorschub eine Säge-Schneidbewegung bzw. -wirkung hervorruft. Dadurch daß der Drehkopf an der oberen äußeren Gehäuseseite, also axial von der Saug-Aktivseite, relativ weit weg versetzt angeordnet ist, ergibt sich unter Zugbelastung und auch unter Eigengewicht ein relativ hohes Kippmoment, weswegen eine relativ hohe Saugkraft benötigt wird, die durch die Vakuumpumpe aufgebracht wird. Dies bedeutet einen relativ komplexen Aufbau des Saughebers selbst und daß stets entsprechende Vakuumanschlüsse zur Verfügung stehen müssen. Zudem ist die lange Zugfeder relativ hinderlich, da sie in losem Zustand unter Eigengewicht durchhängt und Beschädigungen verursachen kann.

Aufgabe der Erfindung ist es, ein Werkzeug oben genannter Gattung anzugeben, das einfach und sicher in Aufbau und Handhabung ist, nur von Hand betätigbar ist, ohne Zusatzaggregate bzw. Vakuumanschlüsse.

Diese Aufgabe wird durch ein Werkzeug mit den Merkmalen des Anspruchs 1 gelöst. In den Unteransprüchen werden Weiterbildungen des Erfindungsgedankens beschrieben.

Demgemäß ist die zwischen Drehkopf und Schneidedraht angeordnete Feder eine Druckfeder, die zwischen einer äußeren, tangentialen Feder-Abstützwand und einem innerhalb von dieser radial verschieblichen Drahthalter angeordnet ist. Zudem ist der Draht mit dem Drahthalter so verbunden, daß bei Zug am Draht die Feder zusammengedrückt wird und bei Entlastung die Feder entspannt wird, wobei der Halter radial einwärts verschoben wird und so den Draht radial nach innen zieht. Der aktive Teil, nämlich die Feder, ist nunmehr in Form einer Druckfeder radial innerhalb des Drahtangriffspunktes des Drehkopfes angeordnet. Bei Entlastung des Drahtes wird auch die Feder entlastet, wodurch sie sich radial einwärts entspannt, wodurch in entspanntem Zustand die Feder nicht mehr mit dem äußeren Ende des Schneidedrahtes unter Eigengewicht abwärts hängt, sondern der Schneidedraht durch die Feder-Abstützwand, durch die er hindurchgeführt ist, stets gleichmäßig abgestützt verbleibt.

Von besonderem Vorteil ist, wenn ein handelsüblicher, handbetätigter Saugheber verwendet wird, der ein relativ niedriges topfförmiges Gehäuse aufweist, an dessen oberer Außenseite der Betätigungshebel zum Erzeugen des notwendigen Saugvakuums vorgesehen ist. Die Verwendung eines handbetätigten Saughebers ist erst dadurch möglich geworden, daß keine große, schwere Zugfeder mehr notwendig ist.

Erfindungsgemäß kann der Drehkopf ein an der Gehäuseoberseite drehbar befestigter Arm sein, der radial herausragt und an dessen äußeren Ende im wesentlichen senkrecht nach oben oder vorzugsweise nach unten herausragend die Feder-Abstützwand angebracht ist. Als Drahthalter ist eine Scheibe vorgesehen, deren Durchmesser gleich oder größer als der Federdurchmesser ist, wobei der durch die Feder und dann durch die Feder-Abstützwand hindurchgeführte Draht mittig an der Scheibe und der Wand befestigt bzw. hindurchgeführt ist. Hierdurch ist eine sehr einfache Konstruktion möglich, die jedoch funktionssicherer ist, wenn an der Scheibe ein Stab befestigt ist, der durch die Abstützwand gleitend hindurchgeführt wird, wobei an dem durch die Scheibe radial nach außen ragenden Ende des Stabes der Draht austauschbar angebracht ist. Die Feder befindet sich somit konzentrisch um den Stab und gleichzeitig zwischen Scheibe und Abstützwand angeordnet und wird beim Ziehen am Draht über die Scheibe gegen die Abstützwand gedrückt, bei Entlastung schiebt die Feder die Scheibe radial nach innen und zieht den Stab mit daran befestigtem Drahtseil einwärts. Dadurch daß die Abstützwand vorzugsweise axial nach unten, auf die Scheibe zuweist, ist auch der Angriffspunkt des Drahtes axial sehr nahe an die Windschutzscheibe herangeführt, so daß das Kippmoment maximal reduziert ist und somit auch die Ansaugkraft des Saughebers nicht so hoch sein muß.

Von besonderem Vorteil ist, wenn der Drehkopf ein Drehreifen ist, der konzentrisch auf dem Außenumfang des Saughebergehäuses schwenkverschiebbar, jedoch axial unverschiebbar aufsitzt, wobei die untere Stirnfläche des Reifens in festgesaugtem Zustand des Saughebers auf der Kfz-Scheibe aufliegen kann. Dadurch daß der Drehreifen an der Windschutzscheibe aufliegt, ist eine zusätzliche axiale Abstützung vorhanden.

Die Feder-Abstützwand kann dabei ein axial nach oben sich erstreckender Fortsatz des Drehreifens sein, so daß sich der gesamte Druckfeder-Aufbau innerhalb des Drehreifen-Durchmessers befindet, so daß eine äußerst platzsparende Ausführungsform bereitgestellt ist.

Die Feder-Abstützwand kann jedoch auch am Außenumfang des Drehreifens radial nach außen versetzt angeordnet sein und zusammen mit mindestens einem radialen Tragarm ein Federgehäuse bilden. Somit befindet sich die Druckfeder mit Drahthalter zwischen Außenumfang und Feder-Abstützwand angeordnet und stützt sich zudem an dem mindest einen radialen Tragarm seitlich oder axial ab. Dadurch daß nur geringfügige Sägebewegungen durch den Draht auszuführen sind, kann die Druckfeder auch relativ kurz ausgelegt werden, so daß das radial herausragende Federgehäuse relativ kurz gestaltet werden kann, wodurch es vom Volumen her nicht störend bei Handhabung und Lagerhaltung wirkt.

Von Vorteil ist, wenn der Drahthalter in Art eines Platten-Schlittens ausgebildet ist, der in der Federkammer radial in bezug auf den Saugheber bzw. axial geführt in bezug auf die Feder verschiebbar ist.

Wird dann noch der Drahthalter-Schlitten bzw. -schieber nicht mehr direkt mit dem durch die Feder-Abstützwand hindurchgeführten Draht verbunden, sondern mit einem durch die Abstützwand hindurchgeführten Stab, an dessen herausragenden Ende der Draht befestigt ist, dann ist der schlittenförmige Drahthalter in Art eines Kolbens ausgebildet, der eine sichere Funktion aufweist.

In vorteilhafter Weise ist das Federgehäuse mit einer U-förmig am äußeren Umfang des Drehreifens aufsitzenden Wandung ausgestattet, die eine Federkammer bildet, in der sich dann der Federkolben befindet. Die Federkammer kann dabei rundum geschlossen sein, d.h. Wandungen aufweisen, so daß ein Federgehäuse vorhanden ist, wodurch die beweglichen Teile, also Feder und Drahthalter, nach außen hin abgekapseltund vor Verschmutzung abgeschirmt sind. Zugleich ist die Unfallgefahr weitgehend reduziert, da ein Einklemmen z.B. der Finger zwischen den beweglichen Teilen durch die Verkapselung ausgeschlossen ist. Dabei kann das Federgehäuse einen rechteckigen Querschnitt aufweisen, oder, entsprechend dem Durchmesser der verwendeten Druckfeder, zylindrisch sein.

Gemäß einer weiteren vorteilhaften Ausbildungsform kann der Drehkopf auch als ein am Mantel des Saughebergehäuses mittig rotierbarer und axial unverschiebbar angeordneter, schmaler Drehring sein. An diesem Drehring ist radial herausragend die Kolbenstange einer Zylinder-Federkapsel befestigt, wobei die Feder-Abstützwand der Zylinder-Kolben ist, während der Drahthalter der Zylinder ist, durch dessen radial innere Stirnwand die Kolbenstange hindurchgeführt ist, wobei sich an diese Stirnwand innen die Feder einseitig abstützt. Zwischen der inneren Stimwand und dem Kolben des Zylinders ist die Feder angeordnet, während die Zylinderaußenwand der Befestigung des Schneidedrahtes dient. Auch dieser Federzylinder kann sehr kurz und kompakt ausgebildet sein, mit nur geringem Federhub, so daß auch hier insgesamt ein platzsparender und zugleich sicherer Aufbau bereitgestellt ist.

Nachfolgend wird die Erfindung anhand mehrerer Ausführungsbeispiele unter Bezug auf die Zeichnung näher erläutert.

Es zeigen:
- Fig. 1:: eine Ansicht auf ein erfindungsgemäßes Werkzeug im Einsatz,
- Fig. 2:: eine Draufsicht auf den Saugheber mit Drehreifen und Federkasten,
- Fig. 3:: eine Ansicht von unten auf den Saugheber nach Fig. 2,
- Fig. 4:: eine Perspektivansicht eines Saughebers mit Drehreifen und axial darin befestigter Feder-Abstützwand,
- Fig. 5:: einen Saugheber mit Dreharm, mit axial nach oben gerichteter Feder-Abstützwand,
- Fig. 6:: eine Ansicht wie in Fig. 6, mit am Dreharm vertikal nach unten ausgerichteter Feder-Abstützwand,
- Fig. 7:: eine Teilansicht eines Saughebers mit Drehring und daran befestigter Federkapsel in axialem Schnitt,
- Fig. 8:: eine Perspektivansicht auch eine Ausführungsform nach Fig. 7, mit Drehring und Federkapsel,
- Fig. 9:: einen teilweisen axialen Schnitt durch eine Ausführungsform mit Drehreifen und Joch-Federkapsel,
- Fig. 10:: einen horizontalen Schnitt durch die Ausführungsform nach Fig. 9,
- Fig. 11:: einen axialen Schnitt durch einen herkömmlichen handbetätigten Saugheber, in gespanntem Zustand,
- Fig. 12:: einen axialen Schnitt durch einen Saugheber in erfindungsgemäßer weiterer Anpassung, mit einem Abstütz-Drehreifen, in entspanntem Zustand, und
- Fig. 13:: einen Schnitt wie in Fig. 12, mit dem Saugheber in gespanntem Zustand.

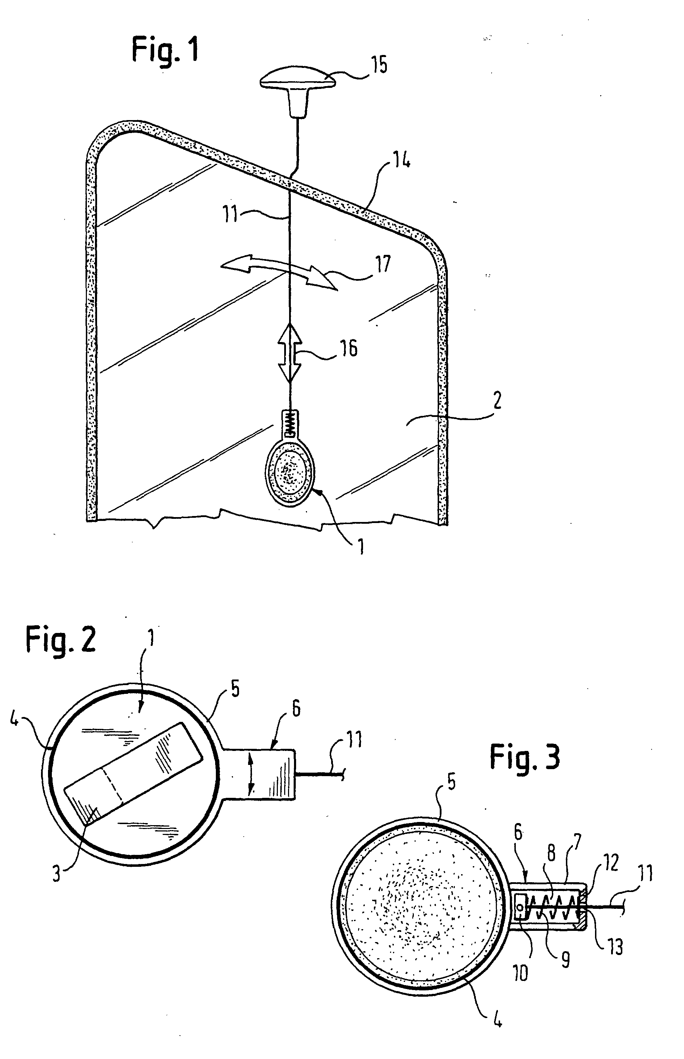

Wie aus Fig. 1 erkennbar ist, besteht das erfindungsgemäße Werkzeug aus einem Saugheber 1, der als Befestigungselement des Werkzeugs an einer Kfz-Windschutzscheibe 2 dient. Der Saugheber 1 weist hier eine marktübliche Ausführung auf, die nach dem bekannten Unterdruckprinzip arbeitet, wie er z.B. bei Halte- und Hebewerkzeugen für größere Glasflächen verwendet wird. Dabei wird, wie näher aus Fig. 2 sowie Fig. 11 bis 13 ersichtlich ist, durch Umlegen eines Hebers 3 der Mittenbereich des mit seinem Gummiboden auf die Scheibe aufgesetzten Saughebers so weit hochgezogen, daß der Außenbereich durch Unterdruck fest gegen die Scheibe gepreßt wird, daß eine feste Verbindung entsteht.

Wie aus Fig. 1 bis 3 ersichtlich ist, ist das im wesentlichen topfförmige Gehäuse 4 des Saughebers 1 über seinen gesamten Umfang von einem Drehreifen 5 derart umschlossen, daß er leicht um 360° in beide Drehrichtungen verschwenkt werden kann, jedoch axial unverschieblich sitzt. Die Höhe des Drehreifens kann im wesentlichen die gleiche Höhe wie das Gehäuse 4 aufweisen. Am Drehreifen 5 ist dabei eine Federkapsel 6 angebracht, die aus einem am Reifen befestigten, vorzugsweise allseitig geschlossenen Federgehäuse 7 besteht, das in sich eine Federkammer 8 birgt. In dieser Federkammer 8 befindet sich ein radial, d.h. in Längsrichtung der Federkammer gegen die Kraft einer Druckfeder 9 verschieblicher Drahthalter 10. Ein Schneiddraht 11, der mit seinem inneren Ende am Drahthalter 10 befestigt ist, ist mittig durch die Feder 11 und durch die äußere Stirnwand des Federgehäuses 7, die die Feder-Abstützwand bildet, bzw. durch eine Bohrung 13 in dieser Wand, nach außen hindurchgeführt. In Aktivzustand ist der Schneidedraht 11 mit seinem anderen Ende durch die Kleberaupe 14 bzw. Gummidichtung hindurchgesteckt, und an seinem äußeren Ende ist ein Griff 15 befestigt.

Eine Windschutzscheibe kann durch dieses Werkzeug einfach, bequem und schnell herausgelöst werden. Dazu wird der Saugheber 1 im Wageninneren auf die Mitte der Windschutzscheibe 2 mit seinem Gummiboden aufgesetzt und der Hebel 3 auf der scheibenabgewandten Seite des Saughebers zur Erzeugung des Unterdrucks umgelegt. Damit ist der Saugheber fest mit der Scheibe verbunden. Nun wird das dem Saugheber abgewandte Ende des Schneiddrahtes 11 durch die Kleberaupe 14 bzw. das Scheibengummi zwischen Karosserie und Scheibe gestochen und damit nach außen geführt. Außen wird am Schneiddraht 11 gezogen, bis er gespannt und die Federkapsel 6 mit dem Drehreifen 5 in Richtung des Ziehenden dreht. Das Drahtende wird dann in an sich bekannter Weise im handelsüblichen Griff 15 befestigt. Dabei wird die Drahtlänge jeweils so eingestellt, daß im Verhältnis zur Scheibe immer ca. 10 - 20 cm Distanz zur Scheibe besteht. Nun kann durch Sägebewegung, d.h. durch Ziehen und Entlasten des Sägedrahtes in Drahtlängsrichtung, entsprechend Pfeil 16 und gleichzeitige Führungs- bzw. Schwenkbewegung entlang des Pfeiles 17, der T-Griff 15 mit dem Draht rund um die Scheibe geführt werden. Dabei wird die Kleberaupe 14 durchschnitten und die Scheibe löst sich von der Karosserie.

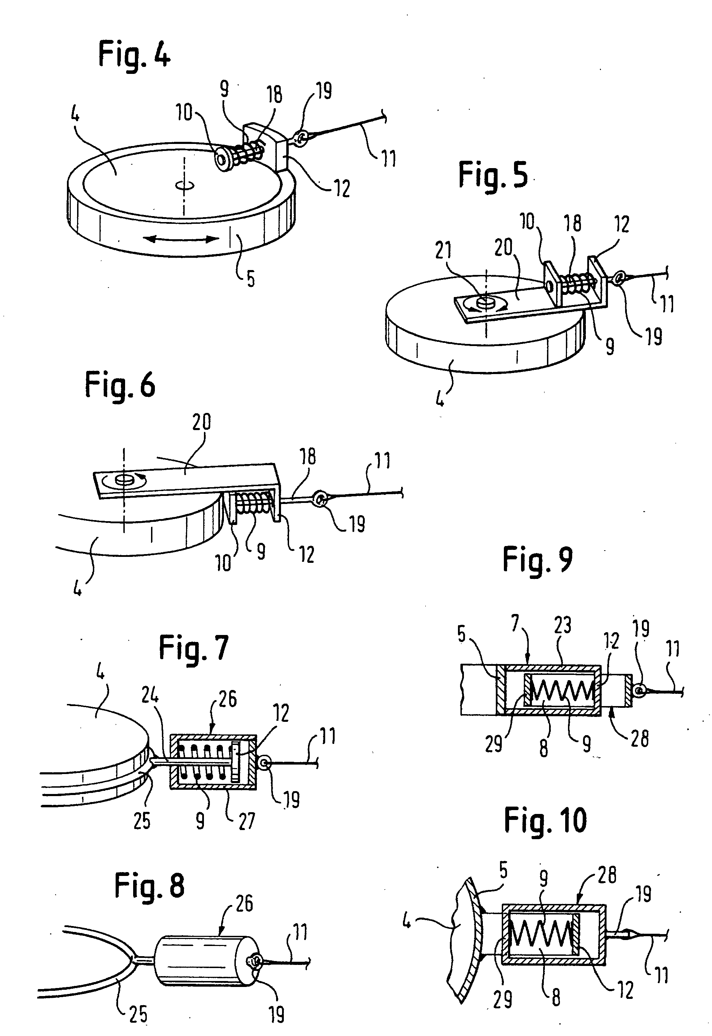

Bei dem in Fig. 4 dargestellten Ausführungsbeispiel besitzt der um das Gehäuse 4 verschwenkbare Drehreifen 5 eine axial an diesem befestigte bzw. axial nach oben herausragende Feder-Abstützwand 12. Durch die hier nicht erkennbare Bohrung durch die Feder-Abstützwand 12 ist ein Stab 18 hindurchgeführt, an dessen inneren Ende ein scheibenförmiger Drahthalter 10 befestigt ist und der durch eine Druckfeder 9 hindurchgeführt ist. Am aus der Feder-Abstützwand 12 herausragenden anderen Ende des Stabes 18 ist eine Öse 19 vorgesehen, die einerseits als Anschlag bei der Einwärtsbewegung unter entlastetem Schneiddraht dient und andererseits zur Befestigung des inneren Endes des Schneiddrahtes 11 ausgebildet ist. Als Entlastungsanschlag kann aber auch eine Anschlagscheibe dienen, die vor der Öse 19 am Stab 18 befestigt ist.

Bei der in Fig. 5 dargestellten Ausführungsform ist an der Oberseite des Saugheber-Gehäuses 4 ein Dreharm 20 befestigt, der um die Achse 21 des Gehäuses 4 um 360° verschwenkbar ist. Am äußeren Ende des Schwenkarmes 20 ist senkrecht und im Verhältnis zum Gehäuse 4 gleichzeitig axial nach oben ragend die Feder-Abstützwand 12 angebracht, durch die der Stab 18, an dem einerseits ein rechteckiger Drahthalter 10 und andererseits eine Öse 19 für die Drahtbefestigung, vorgesehen ist, hindurchgeführt ist. Zwischen Drahthalter 10 und Feder-Abstützwand 12 ist die Druckfeder 9 unter Vorspannung eingelegt. Aus Fig. 5 wird ersichtlich, daß der Dreharm 20 auch so kurz auslegbar ist, daß die Feder-Abstützwand 12 innerhalb des äußeren Umfangs des Gehäuses 4 zu liegen kommen kann, wodurch der Aufbau insgesamt kompakter gestaltet werden kann.

Die Ausführungsform nach Fig. 6 ist in ähnlicher Weise aufgebaut wie diejenige nach Fig. 5, mit dem Unterschied, daß die Abstützwand samt Drahthalter 10 und Feder 9 axial nach unten, in montiertem Zustand auf die Windschutzscheibe hin sich erstrecken. Dadurch wird die gesamte federbelastete Draht-Zugeinrichtung weit nach unten versetzt, wodurch ein positiveres Kräfte- bzw. Momentverhältnis erreicht wird, wobei das durch den Dreharm 20 ausgelöste Kipp-Moment wesentlich verringert wird. Zudem kann hier der Drahthalter 10 in entlastetem Zustand gleich die Rolle des Entlastungs-Bewegungsanschlags bilden, indem er in entlastetem Zustand am Umfang des Gehäuses 4 ansteht. In entlastetem Zustand kann der Drahthalter 10, je nach Auslegung der Druckfeder 9, relativ fest an dem Gehäuse 4 anstehen, wodurch der Dreharm 20 festgebremst wird, so daß er nicht unter Eigengewicht aus einer oberen Stellung in eine untere Stellung schwenken kann.

In Fig. 7 ist ein weiteres Ausführungsbeispiel dargestellt, bei dem am äußeren Umfang des Gehäuses 4 ein Drehring 25 drehverschiebbar, jedoch axial unbeweglich angebracht ist. An diesem Drehring 25 ist eine Federkapsel 26 angebracht, die in Art eines einfach wirkenden Zylinders aufgebaut ist. Dabei ist ein zylindrisches Federgehäuse 27 vorgesehen, das gleichzeitig die Rolle des Drahthalters spielt. Im Inneren des Federgehäuses 27 ist die Feder-Abstützwand 12 vorgesehen, die hier in Art eines Kolbens ausgebildet ist. An der Kolben-Feder-Abstützwand 12 ist eine Kolbenstange 24 vorgesehen, die die nach innen weisende Stirnwand des Federgehäuses 27 durchsetzt und am Drehring 25 starr befestigt ist, wie auch aus Fig. 8 hervorgeht. An der anderen Stirnseite des Federgehäuses ist die Öse 19 zur Befestigung des Schneiddrahtes 11 angebracht.

Ein weiteres Ausführungsbeispiel zeigen Fig. 9 und 10. Wie insbesondere aus Fig. 9 zu erkenne ist, ist am Drehreifen 5 ein U-förmiges Federgehäuse angebracht, dessen parallele Schenkel 23 außen bündig mit den Stirnseiten des Drehreifens 5 abschließen, während die vertikale Verbindungswand die Feder-Abstützwand 12 darstellt. Der Drahthalter ist hier als rechteckiges Drahthalter-Joch ausgebildet, das mit seiner Innenwand 29 zwischen die Wände 23 des Federgehäuses 7 eingreift. In der zwischen den Wänden 12, 23 und 29 gebildeten Federkammer 8 ist die Druckfeder 9 unter Vorspannung eingelegt. An der äußeren Stirnseite der Wand des Drahthalter-Joches 28 ist eine Öse 19 zum Befestigen des Schneidedrahtes vorgesehen.

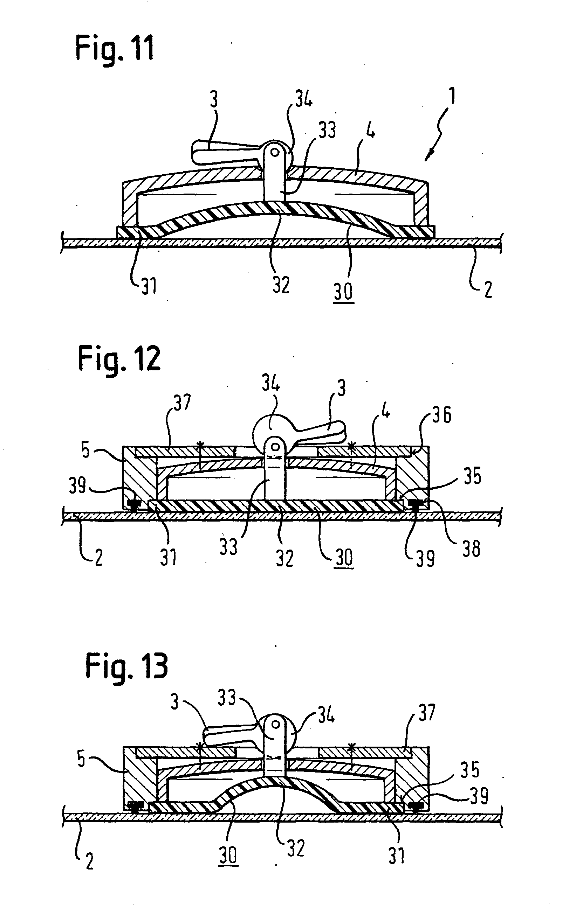

In Fig. 11 ist ein herkömmlicher, handbetätigter Saugheber 1 dargestellt. Es ist zu erkennen, daß dieser aus einem topfförmigen Gehäuse 4 besteht, an dessen Unterseite ein scheibenförmiger Gummiboden konzentrisch so angeordnet ist, daß sein Außenbereich 31 radial über die Mantelfläche des Gehäuses 4 herausragt. Im Mittenbereich 32 des Gummibodens 30 ist ein Arm 33 vertikal nach oben durch das Gehäuse 4 hindurchragend angebracht. An dem herausragenden Ende des Armes 33 ist der Hebel 3 angeordnet, der an seinem dem Gehäuse zuweisenden Ende einen Exzenter 34 besitzt.

Aus Fig. 12 ist zu ersehen, daß erfindungsgemäß konzentrisch zum Außenmantel, ein Drehreifen 5 vorgesehen ist, der an seiner unteren Stirnseite eine Ringstufe 35 aufweist, die den Außenbereich 31 des Gummibodens 30 formmäßig nach oben und radial so umschließt, daß er satt an diesem anliegt, jedoch zu diesem verschwenkbar verbleibt. An der oberen Stirnsseite weist der Drehreifen 5 eine weitere innere Ringstufe 36 auf, in die eine an der Oberseite des Gehäuses 4 angeflanschte Scheibe 37 formmäßig so eingreift, daß der Drehreifen noch gut verschwenkbar verbleibt, jedoch gleichzeitig durch die Scheibe 37 und den Gummiboden 3 gegen axiales Verschieben und Herausfallen ausreichend abgesichert ist. An der unteren Stirnseite weist der Drehreifen 5 zudem eine nach unten offene Ringnut 38 auf, in der eine Lippen-Ringdichtung 39 so eingebracht ist, daß sie so weit aus der unteren Stirnfläche des Drehreifens 5 herausragt, daß sie satt auf der Windschutzscheibe 2 ansteht, den Drehreifen 5 gleichzeitig auf der Scheibe satt abstützend.

In der in Fig. 13 dargestellten, an der Windschutzscheibe festgesaugten Position des Saughebers 1 ist zu erkennen, daß der äußere Bereich 31 durch die Ringstufe 35 an der Scheibe 2 festgehalten wird, während die Lippen-Ringdichtung 39 zur Abdichtung des Außenbereichs beiträgt. Somit wird in angesaugtem Zustand der Mittenbereich 32 eine engere Glockenform aufweisen, da der Randbereich 31 auf größerer Radialerstreckung fest auf der Scheibe 2 angepreßt verbleibt. Die Ringdichtung 39 ist vorzugsweise ein Teflonring, der ein sicher abgestütztes Aufstehen des Drehringes auf der Windschutzscheibe 2 erlaubt und trotz abdichtendem axial festem Aufliegen des Drehreifens 5 über die Ringdichtung 39, ein gutes Drehen bzw. Verschwenken des Drehreifens 5 während der Schneidearbeit erlaubt.

### Bezugszeichenliste

- 1.: Saugheber
- 2.: Windschutzschebe
- 3.: Hebel
- 4.: Gehäuse
- 5.: Drehreifen
- 6.: Federkapsel
- 7.: Federgehäuse
- 8.: Federkammer
- 9.: Druckfeder
- 10.: Drahthalter
- 11.: Schneiddraht
- 12.: Feder-Abstützwand
- 13.: Bohrung
- 14.: Kleberaupe/Dichtung
- 15.: Griff
- 16.: Pfeil
- 17.: Pfeil
- 18.: Stab
- 19.: Öse
- 20.: Dreharm
- 21.: Achse
- 22.: -
- 23.: Gehäuse-Schenkel
- 24.: Kolbenstange
- 25.: Drehring
- 26.: Federkapsel
- 27.: Federgehäuse
- 28.: Drahthalter-Joch
- 29.: Innenwand
- 30.: Gummiboden
- 31.: Außenbereich
- 32.: Mittenbereich
- 33.: Arm
- 34.: Exzenter
- 35.: Ringstufe
- 36.: Ringstufe
- 37.: Scheibe
- 38.: Ringnut
- 39.: Lippen-Ringdichtung

## Patentansprüche

1. Werkzeug zum Herausschneiden von Kraftfahrzeug-Windschutzscheiben, mit
- einem Saugheber (1), der innen an der Windschutzscheibe befestigbar ist,
- einem Drehkopf (5, 20, 25), der am Saugheber konzentrisch, um 360° drehbar befestigt ist,
- einem Schneidedraht (11), der mit seinem einen Ende am Drehkopf befestigt ist und an seinem anderen Ende einen Griff (15) aufweist, und
- einer Feder (9), die zwischen Drehkopf und Drahtende angeordnet ist,
**dadurch gekennzeichnet,**
- **daß** die Feder eine Druckfeder (9) ist, die so zwischen Drehkopf (5, 20, 25) und innerem Ende des Schneidedrahtes (11) angeordnet ist, daß die Druckfeder (9) beim Ziehen am Schneidedraht (11) zusammengedrückt wird und beim Entspannen des Drahtes (11) sich ausdehnt, den Draht einwärts ziehend.

2. Werkzeug nach Anspruch 1, **dadurch gekennzeichnet,**
**daß** die Druckfeder (9) zwischen einer am Drehkopf (5, 20, 25) vorgesehenen äußeren, tangentialen Feder-Abstützwand (12) und einem radial innerhalb von dieser verschieblichen Drahthalter (10, 27, 28) angeordnet ist, und daß der Schneidedraht (11) mit dem Drahthalter (10, 27,28) so verbunden ist, daß bei Zug am Draht die Feder (9) zusammengedrückt und bei Entlastung entspannt wird, wobei bei Entlastung der Halter (10, 27, 28) radial einwärts verschoben wird und so den Draht (11) radial nach innen zieht.

3. Werkzeug nach Anspruch 1, **dadurch gekennzeichnet,**
**daß** ein handbetätigter Saugheber (1) verwendet wird, mit topfförmigem Gehäuse (4), an dessen oberer Außenseite ein Betätigungshebel (3) vorgesehen ist.

4. Werkzeug nach Anspruch 1, **dadurch gekennzeichnet,**
**daß** der Drehkopf ein an der Gehäuseoberseite drehbar befestigter Dreharm (20) ist, der sich radial erstreckt und an dessen äußerem Ende im wesentlichen senkrecht nach oben oder vorzugsweise nach unten die Feder-Abstützwand (12) herausragt und daß als Drahthalter (10) eine Scheibe vorgesehen ist, deren Durchmesser gleich oder größer ist als der Federdurchmesser, wobei der durch die Feder (9) hindurchgeführte Draht (11) mittig an der Scheibe (10) befestigt ist.

5. Werkzeug nach Anspruch 1, **dadurch gekennzeichnet,**
**daß** der Drehkopf ein Drehreifen (5) ist, der konzentrisch auf dem Außenumfang des Saugheber-Gehäuses (4) drehbar, jedoch axial unverschiebbar aufsitzt , wobei vorzugsweise die untere Stirnfläche des Reifens (5) in festgesaugtem Zustand des Saughebers (1) auf der Windschutzscheibe (2) aufliegt.

6. Werkzeug nach Anspruch 5, **dadurch gekennzeichnet,**
**daß** die Feder-Abstützwand (12) ein axial nach oben sich erstreckender Fortsatz des Drehreifens (5) ist .

7. Werkzeug nach Anspruch 5, **dadurch gekennzeichnet,**
**daß** die Feder-Abstützwand (12) radial nach außen versetzt am Außenumfang des Drehreifens (5) angeordnet ist und zusammen mit mindestens einem radialen Tragarm ein Federgehäuse (7) bildet.

8. Werkzeug nach Anspruch 7, **dadurch gekennzeichnet,**
**daß** das Federgehäuse (7) in Radialebene eine U-förmige Wandung besitzt, die am äußeren Umfang des Drehkopfgehäuses aufsitzt, eine Federkammer (8) bildend.

9. Werkzeug nach Anspruch 1 und 8, daß der Drahthalter (10) ein Schlitten bzw. Kolben ist, der in der Federkammer (8) radial zum Saugheber bzw. axial zur Feder geführt verschiebbar ist.

10. Werkzeug nach Ansprüchen 4 und 7 - 9, **dadurch gekennzeichnet,**
**daß** ein durch die Feder (9) axial hindurchgeführter Stab (18) am Drahthalter (10) befestigt ist, der durch die Feder-Abstützwand (12) verschieblich hindurchgeführt ist und auch in entlastetem Zustand der Feder (9) aus der Wand (12) herausragt, wobei an dem herausragenden Ende eine Öse (19) angeordnet ist, an der der Schneidedraht (11) austauschbar befestigt ist.

11. Werkzeug nach Anspruch 9, **dadurch gekennzeichnet,**
**daß** das U-förmige Gehäuse (7) vertikal ausgerichtet ist, in horizontaler Richtung offen und daß der Drahthalter als rahmenförmiges Joch (28) ausgebildet ist, das die Feder-Abstützwand (12) horizontal umgreift, während an der Joch-Vorderwand der Schneidedraht (11) befestigt ist.

12. Werkzeug nach Anspruch 1, **dadurch gekennzeichnet,**
**daß** als Drehkopf ein am Mantel des Saugheber-Gehäuses 84) im wesentlichen mittig rotierbar und axial unverschieblich ein relativ schmaler Drehring (25) befestigt ist, an dem radial herausragend die Kolbenstange (24) einer Zylinder-Federkapsel (26) befestigt ist, wobei die Feder-Abstützwand (12) der Zylinder-Kolben ist, während der Drahthalter das Zylinder-Federgehäuse (27) ist, durch dessen radiale Innenwand (29) die Kolbenstange (24) hindurchgeführt ist und an der sich die Feder (9) innen abstützt, während an der äußeren Stirnwand des Zylinder-Federgehäuses (27) sich einerseits die Feder (9) abstützt und andererseits der Schneidedraht (11) befestigt ist.

13. Werkzeug nach Anspruch 5, **dadurch gekennzeichnet,**
**daß** der Drehreifen (5) an seiner unteren Stirnfläche eine nach unten und einwärts offene Ringstufe (35) aufweist, die den Außenbereich (31) des Saugheber-Gummibodens (30) in entlastetem Zustand des Saughebers (1) formmäßig satt umschließt.

14. Werkzeug nach Anspruch 13, **dadurch gekennzeichnet,**
**daß** der Drehring (5) an seiner oberen Stirnseite eine nach oben und innen offene Ringstufe (36) aufweist, in die eine an der Oberseite des Saugheber-Gehäuses (4) befestigte Scheibe (37) mit ihrem äußeren Umfangbereich formmäßig eingreift und ein axiales Verschieben nach oben des Drehringes (5) verhindert.

15. Werkzeug nach Anspruch 13, **dadurch gekennzeichnet,**
**daß** an der unteren Stirnfläche des Drehreifens (5) eine nach unten offene Ringnut (38) vorgesehen ist, in der eine Lippen-Ringdichtung (39) so befestigt ist, daß sie in aufgesetztem Zustand des Saughebers auf der Windschutzscheibe (2) satt aufsteht.

16. Werkzeug nach Anspruch 15, **dadurch gekennzeichnet,**
**daß** die Ringdichtung (39) ein Teflonring ist.

## Claims

1. Tool for cutting out motor vehicle windscreens, with
- a suction cup (1) which can be secured to the windscreen on the inside,
- a rotating head (5, 20, 25) which is secured concentrically, pivotable through 360°, on the suction cup,
- a cutting wire (11) which is secured with one of its ends to the rotating head and at its other end exhibits a handle (15), and
- a spring (9) which is arranged between the rotating head and the end of the wire,
**characterised in that**
- the spring is a compression spring (9) which is arranged between the rotating head (5, 20, 25) and the inner end of the cutting wire (11) so that the compression spring (9) is compressed when the cutting wire (11) is pulled, and extends when the wire (11) is released, drawing the wire inwards.

2. Tool according to claim 1, **characterised in that** the compression spring (9) is arranged between an outer tangential spring supporting wall (12) provided on the rotating head (5, 20, 25) and a wire holder (10, 27, 28) displaceable radially inside the latter, and **in that** the cutting wire (11) is connected to the wire holder (10, 27, 28) so that the spring (9) is compressed when the wire is pulled, and relaxed when the wire is released, and the holder (10, 27, 28) is displaced radially inwards when released and in the process draws the wire (11) radially inwards.

3. Tool according to claim 1, **characterised in that** a hand-operated suction cup (1) is used, with a pot-shaped housing (4) on the upper outer side of which an operating lever (3) is provided.

4. Tool according to claim 1, **characterised in that** the rotating head is a rotating arm (20) which is secured rotatably on the upper side of the housing and extends radially and at the outer end of which the spring supporting wall (12) projects essentially perpendicularly upwards or preferably downwards, and **in that** the wire holder (10) takes the form of a disc the diameter of which is equal to or greater than the diameter of the spring, and the wire (11) passed through the spring (9) is secured centrally to the disc (10).

5. Tool according to claim 1, **characterised in that** the rotating head is a rotating collar (5) which sits concentrically on the outside circumference of the suction cup housing (4) displaceable pivotably but immovable axially, and preferably when the suction cup (1) is secured by suction, the lower end surface of the collar (5) bears on the windscreen (2).

6. Tool according to claim 5, **characterised in that** the spring supporting wall (12) is an extension of the rotating collar (5) extending axially upwards.

7. Tool according to claim 5, **characterised in that** the spring supporting wall (12) is arranged offset radially outwards on the outside circumference of the rotating collar (5) and together with at least one radial supporting arm forms a spring housing (7).

8. Tool according to claim 7, **characterised in that** in the radial plane the spring housing (7) has a U-shaped wall which sits on the outside circumference of the rotating head housing, forming a spring chamber (8).

9. Tool according to claim 1 and 8, **characterised in that** the wire holder (10) is a slide or piston which is displaceable in the spring chamber (8), guided radially in relation to the suction cup or axially in relation to the spring.

10. Tool according to claims 4 and 7 to 9, **characterised in that** a rod (18) passed axially through the spring (9) is secured to the wire holder (10) which is passed displaceably through the spring supporting wall (12) and also projects from the wall (12) when the spring (9) is in a relaxed state, and at the projecting end there is an eye (19) to which the cutting wire (11) is secured changeably.

11. Tool according to claim 9, **characterised in that** the U-shaped housing (7) is aligned vertically and open in the horizontal direction, and **in that** the wire holder takes the form of a frame-shaped yoke (28) which fits horizontally around the spring supporting wall (12), while the cutting wire (11) is secured to the yoke front wall.

12. Tool according to claim 1, **characterised in that** the rotating head takes the form of a relatively narrow rotating ring (25) which is secured to the outer surface of the suction cup housing (4) so that it is essentially rotatable centrally and immovable axially and to which the piston rod (24) of a spring cylinder (26) is secured projecting radially, and the spring supporting wall (12) is the piston of the cylinder, while the wire holder is the spring cylinder housing (27) through the radial inner wall (29) of which the piston rod (24) is passed and on which the spring (9) is supported on the inside, while firstly the spring (9) is supported and secondly the cutting wire (11) is secured on the outer end wall of the spring cylinder housing (27).

13. Tool according to claim 5, **characterised in that** on its lower end surface the rotating collar (5) exhibits an annular step (35) which is open at the bottom and on the inside and which through its shape fits flushly around the outer area (31) of the rubber bottom (30) of the suction cup when the suction cup (1) is in a relaxed state.

14. Tool according to claim 13, **characterised in that** on its upper end side the rotating collar (5) exhibits an annular step (36) which is open at the top and on the inside and in which a disc (37) secured to the upper side of the suction cup housing (4) engages with its outer circumferential area by virtue of its shape and prevents axial upward displacement of the rotating collar (5).

15. Tool according to claim 13, **characterised in that** on the lower end surface of the rotating collar (5) there is an annular groove (38) which is open towards the bottom and in which an annular lip seal (39) is secured so that it bears snugly on the windscreen (2) when the suction cup is in position.

16. Tool according to claim 15, **characterised in that** the annular seal (39) is a Teflon ring.

## Revendications

1. Outil pour découper des pare-brise de véhicules automobiles comprenant :
- un dispositif (1) de levage à ventouse, qui peut être fixé à l'intérieur sur le pare-brise,
- une tête (5, 20, 25) tournante, qui peut être fixée avec possibilité de tourner de 360°, concentriquement au dispositif de levage à ventouse,
- un fil (11) de coupe qui est fixé par l'une de ses extrémités à la tête tournante et qui comporte à son autre extrémité une manette (15) et,
- un ressort (9) qui est interposé entre la tète tournante et l'extrémité du fil,
**caractérisé,**
- **en ce que** le ressort est un ressort (9) de compression qui est disposé entre la tête (5, 20, 25) tournante et l'extrémité intérieure du fil (11) de coupe, de façon que le ressort (9) de compression soit comprimé lors d'une traction sur le fil (11) de coupe, et soit allongé lorsque le fil (11) est détendu en tirant le fil vers l'intérieur.

2. Outil suivant la revendication 1, **caractérisé en ce que** le ressort (9) de compression est disposé entre une paroi (12) d'appui du ressort tangentielle extérieure prévue sur la tête (5, 20, 25) toumante et un ports fil (10, 27, 28) pouvant coulisser radialement à l'intérieur de cette paroi, et **en ce que** le fil (11) de coupe est relié au porte fil (10, 27, 28), de façon que, lors d'une traction sur le fil, le ressort (9) est comprimé et est détendu lorsque l'on relâche la traction lors de la détente, le porte fil (10, 27, 28) étant déplacé radialement vers l'intérieur et tirant ainsi le fil (11) radialement vers l'intérieur.

3. Outil suivant la revendication 1, **caractérisé en ce qu'**il est utilisé un dispositif (1) de levage à ventouse pouvant être actionné à la main et ayant un boîtier (4) en forme de pot, sur la face supérieure extérieure duquel est prévu un levier (3) d'actionnement.

4. Outil suivant la revendication 1, **caractérisé en ce que** la tête tournante est un bras (20) tournant fixé tournant sur la face supérieure du boîtier et s'étendant radialement et à son extrémité extérieure la paroi (12) d'appui du ressort fait saillie sensiblement verticalement vers le haut ou de préférence vers le bas et **en ce qu'**il est prévu comme porte fil (10) un disque dont le diamètre est égal ou supérieur au diamètre du ressort, le fil (11) qui passe dans le ressort (9) étant fixé au milieu au disque (10).

5. Outil suivant la revendication 1, **caractérisé en ce que** la tête tournante est un anneau tournant qui peut tourner concentriquement sur le pourtour extérieur du boîtier (4) du dispositif de levage à ventouse, mais qui ne peut pas se décaler axialement, la face frontale intérieure du anneau (5) reposant de préférence, lorsque le dispositif (1) de levage à ventouse est fixé par aspiration, sur le pare-brise (2).

6. Outil suivant la revendication 5, **caractérisé en ce que** la paroi (12) d'appui du ressort est un prolongement s'étendant axialement vers le haut de l'anneau (5) tournant.

7. Outil suivant la revendication 5, **caractérisé en ce que** la paroi (12) d'appui du ressort est décalée radialement vers l'extérieur sur le pourtour extérieur de l'anneau (5) tournant et forma, ensemble avec au moins un bras support radial, un boîtier (7) pour le ressort.

8. Outil suivant la revendication 7, **caractérisé en ce que** le boîtier (7) pour le ressort a, dans un plan radial, une paroi en forma de U qui repose sur le pourtour extérieur du boîtier de la tête tournante en formant une chambre (8) pour un ressort.

9. Outil suivant les revendications 1 et 8, **caractérisé en ce que** le porte fil (10) est un patin ou un piston qui peut coulisser en étant guidé radialement par rapport au dispositif de levage à ventouse ou axialement par rapport au ressort.

10. Outil suivant les revendications 4 et 7 à 9, **caractérisé en ce qu'**il est fixé au porte fil (10) un barreau (18) qui passe axialement dans le ressort (9), qui passe en coulissant à travers la paroi (12) d'appui du ressort et qui fait saillie de la paroi (12), même lorsque le ressort (9) est détendu, et il est prévu à l'extrémité en saillie un oeillet (19), sur lequel le fil (11) de coupe peut être fixé avec possibilité d'être remplacé.

11. Outil suivant la revendication 9, **caractérisé en ce que** le boîtier (7) en forme de U est dirigé verticalement en étant ouvert en direction horizontale et **en ce que** le porte fil est constitué en culasse (28) en forma de cadre qui entoure horizontalement la paroi (12) d'appui du ressort, tandis que le fil (11) de coupe est fixé à la paroi avant de la culasse.

12. Outil suivant la revendication 1, **caractérisé en ce qu'**il est fixé comme tête toumante un anneau (25) tournant, relativement étroit, sur la surface latérale du boîtier (84) du dispositif de levage à ventouse, avec possibilité de tourner sensiblement au milieu et sans possibilité de décalage axial, anneau sur lequel est fixée, en faisant saillie radialement, la tige (24) de piston d'un cylindre-capsule (26) de ressort, la paroi (12) d'appui du ressort étant le cylindre-piston, tandis que le porte fil est le cylindre-boîtier (27) de ressort à travers la paroi (29) intérieure radiale duquel passe la tige (24) de piston et sur lequel s'appuie intérieurement le ressort (9), tandis que sur la paroi frontale extérieure du cylindre-boîtier (27) de ressort s'appuie d'une part le ressort (29) et d'autre part est fixé le fil (11) de coupe.

13. Outil suivant la revendication 5, **caractérisé en ce que** l'anneau (5) tournant comporte, sur sa surface frontale inférieure, un palier (35) annulaire ouvert vers le bas et vers l'intérieur, qui entoure complètement en forma la partie (31) extérieure du fond (30) en caoutchouc du dispositif de levage à ventouse, lorsque le dispositif (1) à levage par ventouse est à l'état déchargé.

14. Outil suivant la revendication 13, **caractérisé en ce que** l'anneau (5) tournant comporte, sur sa face frontale supérieure, un palier (36) annulaire ouvert vers le haut et vers l'intérieur, dans lequel pénètre à complémentarité de forme par sa partie extérieure périphérique, un disque (37) fixé sur la face supérieure du boîtier (4) du dispositif de levage à ventouse et empêche un déplacement axial vers le haut de l'anneau (5) tournant.

15. Outil suivant la revendication 13, **caractérisé en ce qu'**il est prévu sur la face frontale intérieure de l'anneau (5) tournant, une gorge (38) annulaire ouverte vers le bas, dans laquelle un joint (39) torique d'étanchéité à l'air est fixé de manière à s'appliquer à fond sur le pare-brise (2) lorsque le dispositif de levage à ventouse est posé.

16. Outil suivant la revendication 15, **caractérisé en ce que** le joint (39) torique est un joint en téflon.
